# EUROPEAN PATENT APPLICATION

(11) **EP 4 203 425 A1**
(43) Date of publication of application: **28.06.2023**
(21) Application number: 21863485.5
(22) Date of filing: 11.08.2021
(51) Int. Cl.: H04L 45/42, H04L 47/30

(54) **METHOD, DEVICE AND SYSTEM FOR FORWARDING MESSAGE**

(30) Priority: 07.09.2020 CN 202010927432; 16.12.2020 CN 202011487166
(71) Applicant: Huawei Technologies Co., Ltd., Shenzhen, Guangdong 518129 (CN)
(72) Inventor: BAO, Lei, Shenzhen, Guangdong 518129 (CN); LIAO, Ting, Shenzhen, Guangdong 518129 (CN); XIAO, Yaqun, Shenzhen, Guangdong 518129 (CN); XU, Juhua, Shenzhen, Guangdong 518129 (CN); ZHENG, Juan, Shenzhen, Guangdong 518129 (CN); CHEN, Xinjun, Shenzhen, Guangdong 518129 (CN)
(74) Representative: Körber, Martin Hans
(86) International application number: PCT/CN2021/112158
(87) International publication number: WO 2022/048418

(57) **Abstract**

A packet forwarding method, a system, an apparatus, and a network device are provided, and pertain to the field of communications technologies. The method is performed by a network device, and includes: obtaining first identification information of a first network resource required for forwarding first traffic to which a first packet belongs; determining a target port set based on the first identification information and a destination address of the first packet, where the target port set is associated with the first network resource; and selecting a first port from the target port set to forward the first packet. According to this method, it can be ensured that the network device forwards service traffic by using a network resource allocated to the service traffic, so that quality of service for a service is improved.

## Description

This application claims priority to Chinese Patent Application No. 202010927432.2, filed on September 7, 2020 and entitled "METHOD AND DEVICE FOR ENSURING QUALITY OF SERVICE THROUGH NETWORK SLICE MATCHING", and priority to Chinese Patent Application No. 202011487166.2, filed on December 16, 2020 and entitled "PACKET FORWARDING METHOD, DEVICE, AND SYSTEM", which are incorporated herein by reference in their entireties.

### TECHNICAL FIELD

This application relates to the field of communications technologies, and in particular, to a packet forwarding method, a device, and a system.

### BACKGROUND

When traffic in a network is forwarded according to a shortest path forwarding rule, for maximization of link resource utilization, an equal-cost multi-path routing (equal-cost multi-path routing, ECMP) ECMP or unequal-cost multiple path (unequal-cost multiple path, UCMP) mechanism is usually considered to be deployed on a forwarding network device to implement multi-path load balancing for traffic forwarding. In existing implementation, if the ECMP mechanism is used to forward traffic, it is considered that a plurality of links to a same destination device are equal-cost links, and the traffic is evenly distributed and forwarded on these equal-cost links, regardless of a link bandwidth difference. If the UCMP mechanism is used to forward traffic, it is considered that a plurality of links to a same destination device have different costs (cost). Specifically, corresponding link costs may be configured based on bandwidth of the plurality of links. In this way, when being forwarded, the traffic can be proportionally balanced on the plurality of links based on the bandwidth of the plurality of links.

Currently, in a 5th generation (5th generation, 5G) network application scenario, to meet a service level agreement (service level agreement, SLA) requirement of a network service to ensure network use experience of a user, a network transmission resource may be reserved for service traffic of the user by using a technology such as network slicing.

A basic requirement of network slice deployment is that a same service can be deployed on a same slice for end-to-end forwarding, so that SLA of the network service is better ensured. Therefore, when service traffic is forwarded, it is expected that a slice resource reserved for the service traffic by a network device on which a network slice is deployed can be used to forward the service traffic on the network device. However, when a load balancing manner such as ECMP or UCMP is implemented in an existing mechanism, a packet forwarding port randomly determined according to a hash algorithm may not be an egress port of an associated network slice resource. Consequently, service traffic actually cannot be always forwarded by using a reserved network slice resource, and SLA assurance of the service traffic is affected.

To resolve the problem described in the foregoing scenario, a related technology suggests reserving corresponding network slice resources on a plurality of links on which load balancing needs to be performed. However, this deployment manner causes a large quantity of redundant link resources, resulting in a network resource waste.

### SUMMARY

Embodiments of this application provide a packet forwarding method, a system, an apparatus, and a network device, to forward service traffic by using a network resource allocated to the service traffic, so as to ensure SLA of a service. The technical solutions are as follows.

According to a first aspect, a packet forwarding method is provided. The method is performed by a network device, and the method includes:
obtaining first identification information of a first network resource required for forwarding first traffic to which a first packet belongs; determining a target port set based on the first identification information and a first destination address of the first packet, where the target port set is associated with the first network resource; and selecting a first port from the target port set to forward the first packet.

The network device may be any network device on a first traffic forwarding path, for example, may be a head node, an intermediate node, or a tail node on the forwarding path within a range of a management domain.

The first network resource may be a network slice, and the network slice may specifically include a sub-interface resource included in a port of the network device, or may include a bandwidth resource or a queue resource associated with a port of the network device. When the first network resource is a network slice, the first identification information may be a slice identifier.

The identification information for identifying the first network resource may be one identifier, for example, a network slice identifier; or may be an identifier group; or may be a field in a packet of the first traffic or a specific bit in a field, for example, a plurality of designated bits in a source address or a destination address carried in the packet. In a possible example, the destination address may be, for example, a 128-bit internet protocol (Internet Protocol, IP) address included in a destination address field carried in a packet header of the packet. The identification information may be carried in a packet received by the network device, or may be determined by the network device according to a preset rule, or may be obtained by the network device from a controller.

In this method, identification information of a network resource corresponding to traffic is obtained, and a target port set is determined based on the identification information, where one or more ports included in the target port set are associated with the network resource. In this way, the network device can forward service traffic by using a network resource allocated to the service traffic. In some actual application scenarios, all hop-by-hop forwarding devices on a traffic forwarding path can support this method. This ensures that traffic can be transmitted on an entire end-to-end forwarding path on a network side by using an allocated network resource, to implement end-to-end SLA assurance for the traffic.

In a possible implementation, the determining a target port set based on the first identification information and a destination address carried in the first packet includes: determining the target port set based on a correspondence between the first identification information, the first destination address, and the target port set by using the first identification information and the first destination address; or determining a first port group based on a correspondence between the first destination address and the first port group, and determining, in the port group based on the first identification information, the target port set that meets a condition. A port included in the first port group is a port of the first network device to the first destination address.

The network device may determine the corresponding target port set based on the first identification information and the destination address in a plurality of manners. For example, in a possible case, the network device may store the correspondence between the first identification information, the destination address, and the target port set. The correspondence may be determined by using one or two correspondence tables. In another possible case, the network device may reuse an existing routing and forwarding table in the network device. The routing and forwarding table stores a correspondence between a port group to a destination device and an address of the destination device. Based on this, how to determine one or more ports corresponding to the first identification information in the port group when a port corresponding to the first identification information needs to be used may be indicated in a specific form in the routing and forwarding table. For example, a corresponding "selected" identifier column may be added to a port group column of the routing and forwarding table, where a port whose "selected" identifier is "1" is the one or more ports corresponding to the first identification information in the port group. A target port set corresponding to a network resource may be quickly determined by locally storing a correspondence between identification information, a destination address, and a port, to ensure that service traffic is forwarded by using one or more ports belonging to the target port set, so as to ensure use of the network resource when the service traffic is forwarded.

In a possible implementation, the first traffic further includes a second packet, and the method further includes: determining the target port set based on the first identification information of the first network resource required for forwarding the first traffic to which the second packet belongs and the first destination address carried in the second packet; and selecting a second port from the target port set to forward the second packet.

After determining the target port set based on the first identification information, the network device may select a specific port from the target port set to forward service traffic. When the target port set includes only one port, it indicates that when the target port set is determined, the port is selected to forward all the service traffic. When the target port set includes a plurality of ports, the network device may select different ports from the set according to a preset rule, to forward different packets in the service traffic. In a possible case, when a corresponding port used for forwarding a plurality of packets belonging to the service traffic is determined, a used preset rule may be a load balancing rule. For example, load balancing may be performed based on a source media access control (Media Access Control, MAC) address, a destination MAC address, a source IP address, or a destination IP address of a packet. In some network scenarios, load balancing may be performed with reference to another attribute carried in the packet, such as a source physical port or a virtual local area network (Virtual Local Area Network, VLAN). An algorithm used for load balancing may be, for example, ECMP or UCMP, or may be a load balancing algorithm that is set according to another rule, for example, based on a proportion of the first network resource associated with each port in the target port set. If ECMP or UCMP is used, a manner such as hash or polling may be specifically used. In another possible case, the network device may not use the load balancing rule, but specify some ports in the one or more ports according to another preset principle, for example, according to a service requirement or a plan, to forward the plurality of packets.

The network device forwards a traffic packet according to the preset rule, so that flexibility of forwarding the traffic packet can be improved. Further, if the load balancing rule is used as the preset rule, efficiency of forwarding the traffic packet can be improved, and compatibility with a conventional forwarding mechanism during traffic packet forwarding can be ensured.

In a possible implementation, the first port includes a plurality of sub-interfaces, and the selecting a first port from the target port set to forward the first packet includes: determining a sub-interface in the plurality of sub-interfaces, where the determined sub-interface is associated with the first network resource; and forwarding the first packet by using the determined sub-interface.

For example, a type of the first network resource is a network slice. There may be a plurality of network slice resources associated with the target port set that includes one or more ports on the network device. The first port in the target port set is used as an example. In a case, a network slice resource associated with the first port may be, for example, one or more sub-interfaces that belong to the first port. For example, the first port includes 10 sub-interfaces, and three of the sub-interfaces are associated with a network slice resource allocated to the first traffic. In a possible implementation, the three sub-interfaces may also be identified by the first identification information. To be specific, in this implementation, the first identification information may be used to determine one or more ports that belong to the target port set and that are used to forward the first traffic on the network device, and may be used to determine one or more sub-interfaces that are used to forward the first traffic and that are in each of the one or more ports. For example, the first packet may be forwarded by a first network device by using one of the three sub-interfaces included in the first port.

In this case, the network device may first determine, based on the first identification information corresponding to the first network resource, one or more ports that belong to the target port set and that can be used to forward the first traffic, and then determine one or more sub-interfaces corresponding to the first network resource on each of the one or more ports based on the first identification information, to ensure that the allocated first network resource can be accurately used to forward service traffic, and ensure SLA of the service traffic.

In a possible implementation, the method further includes: obtaining a third packet, where the third packet belongs to second traffic; and forwarding the third packet by using a second port group based on a correspondence between a second destination address of the third packet and the second port group when identification information of a network resource required for the second traffic to which the third packet belongs fails to be obtained, where a port included in the second port group is a port of the first network device to the second destination address. For the second traffic, a network may not allocate a corresponding dedicated network resource to the second traffic, or at least the current network device does not store dedicated network resource information of the second traffic. As a result, after receiving the second traffic, the network device cannot obtain the identification information of the network resource corresponding to the second traffic. In this case, the network device may choose to forward the second traffic by using a conventional traffic forwarding mechanism. For example, the network device may forward the second traffic by using a port group based on a correspondence between the port group and an address of a destination device to which the traffic needs to be sent. The port group may be, for example, a port that is on the network device and that undertakes load balancing-based forwarding. In this way, when the identification information of the network resource corresponding to the second traffic is not hit, the network device may forward the second traffic according to a conventional load balancing rule by using a plurality of ports included in the port group, to implement load balancing for the second traffic.

In a possible implementation, before the first identification information of the first network resource corresponding to the first packet is obtained, the first packet is received, and second identification information of the first network resource corresponding to the first packet is obtained; and obtaining the first identification information of the first network resource corresponding to the first packet includes: obtaining the first identification information based on the second identification information. In some possible application scenarios, the network device configured to perform the method in this embodiment may be a network device having some special roles, for example, an egress network device serving as a domain border node. Still using an example in which a network resource type is a network slice, when the first packet is forwarded across domains, network slices used for the first packet in different network domains may be different. Alternatively, even if it is determined, in a manner such as negotiation, that slices used across domains are a same slice, slice identification information allocated to the same slice in different network domains may still be different because different transmission protocols may be followed in different network domains. Therefore, in the foregoing possible application scenario, the network device may first obtain the first identification information of the network slice used to forward the first packet in a current network domain, and then determine the second identification information of the network slice in a next network domain based on a locally obtained correspondence between the first identification information and the second identification information, to ensure that the first packet can be successfully forwarded by using a network resource in a cross-domain scenario. For example, the network device may obtain the second identification information based on the first identification information and the locally stored correspondence between the first identification information and the second identification information. Alternatively, the network device may send a request to a controller based on the first identification information, to obtain the second identification information from the controller based on the first identification information.

According to a second aspect, a packet forwarding apparatus is provided. The apparatus may include a function unit configured to perform the method for forwarding traffic by using a network resource according to any one of the first aspect or the optional manners of the first aspect.

For example, the apparatus may include an obtaining unit, a determining unit, and a forwarding unit. The obtaining unit is configured to obtain first identification information of a first network resource required for forwarding first traffic to which a first packet belongs. The determining unit is configured to determine a target port set based on the first identification information and a first destination address of the first packet, where the target port set is associated with the first network resource. The forwarding unit is configured to select a first port from the target port set to forward the first packet.

The apparatus obtains identification information of a network resource corresponding to traffic, and determines, based on the identification information, a target port set including one or more ports, where the target port set is associated with the network resource. In this way, the apparatus can forward service traffic to a destination address by using a network resource allocated to the service traffic.

In a possible implementation, for one packet in the first traffic, the determining unit is further configured to: determine the target port set based on a correspondence between the first identification information, the first destination address, and the target port set by using the first identification information and the first destination address; or determine a first port group based on a correspondence between the first destination address and the first port group, and determine, in the first port group based on the first identification information, the target port set that meets a condition. A port included in the first port group is a port of the first network device to the first destination address.

In a possible implementation, the first traffic further includes a second packet, the determining unit is further configured to select a second port from the target port set, and the forwarding unit is further configured to forward the second packet by using the selected second port.

In a possible implementation, the first port and the second port are separately selected from the target port set according to a load balancing rule.

The load balancing rule may be, for example, ECMP, UCMP, or a rule based on a proportion of the first network resource associated with each port in the target port set.

In a possible implementation, the obtaining unit is configured to obtain a third packet; the determining unit is configured to: when identification information of a network resource required for second traffic to which the third packet belongs fails to be obtained, determine, based on a correspondence between a second destination address of the third packet and a second port group, the second port group for forwarding the third packet, where a port included in the second port group is a port of the first network device to the second destination address, and the target port set determined based on the first identification information belongs to the second port group; and the forwarding unit is configured to forward the second traffic by using the second port group.

In a possible implementation, the first port includes a plurality of sub-interfaces, and the selecting a first port from the target port set to forward the first packet includes: determining a sub-interface in the plurality of sub-interfaces, where the determined sub-interface is associated with the first network resource; and forwarding the first packet by using the determined sub-interface.

In a possible implementation, determining one or more sub-interfaces in the plurality of sub-interfaces includes: determining the sub-interfaces in the plurality of sub-interfaces based on the first identification information.

In a possible implementation, the apparatus further includes a receiving unit, and the receiving unit is configured to receive the first packet. Then, the obtaining unit is configured to: obtain second identification information of the first network resource corresponding to the first packet, and obtain the first identification information based on the second identification information.

The first identification information includes an identifier or an identifier group for identifying the first network resource, or the first identification information includes a plurality of designated bits in a source address carried in the first packet or a plurality of designated bits in the destination address.

A port included in the first port group or the second port group is a port that undertakes load balancing-based forwarding.

According to a third aspect, a network device is provided. The network device includes a processor, and the processor invokes program instructions, so that the network device implements an operation performed in the method provided in any one of the first aspect or the possible implementations of the first aspect. The network device may further include a memory. The memory is coupled to the processor, and the program instructions invoked by the processor are stored in the memory. The network device may further include a communications interface. The communications interface is used by the device to communicate with another device. For example, the communications interface may be a transceiver, a circuit, a bus, a module, or a communications interface of another type. The program instructions invoked by the processor may alternatively be pre-stored in an external memory, and are downloaded from the internet before being used and then stored locally. A source of the instructions in the memory is not uniquely limited in this application.

According to a fourth aspect, a packet forwarding system is provided. The system may include one or more network devices according to any one of the third aspect or the possible implementations of the third aspect. Optionally, the system may further include one or more network devices that implement packet forwarding in a conventional manner, instead of forwarding traffic by using the method described in any one of the first aspect or the possible implementations of the first aspect. The conventional manner may be, for example, a conventional load balancing manner. Optionally, the system may further include a controller. The controller may perform functions such as deploying a network resource for a network device on a forwarding path, or advertising identification information used to indicate a network resource.

According to a fifth aspect, a chip system is provided, including a processor and an interface circuit. The interface circuit is configured to receive instructions and transmit the instructions to the processor. The processor is configured to execute instructions corresponding to the method provided in any one of the first aspect or the optional manners of the first aspect.

According to a sixth aspect, a computer-readable storage medium is provided. The storage medium stores program code, and the program code is loaded and executed by a processor, so that a computer implements an operation performed in the method provided in any one of the first aspect or the optional manners of the first aspect.

According to a seventh aspect, a computer program product or a computer program is provided. The computer program product or the computer program includes program code, and when the program code is run on a network device, the network device is enabled to perform the method provided in the first aspect or the optional implementations of the first aspect.

For technical effects brought by any one of the design manners in the second aspect to the seventh aspect, refer to the technical effects brought by a corresponding design manner in the first aspect. Details are not described herein again.

### BRIEF DESCRIPTION OF DRAWINGS

To describe technical solutions in embodiments of this application more clearly, the following briefly describes the accompanying drawings for describing the embodiments. It is clear that the accompanying drawings in the following descriptions show merely some embodiments of this application, and a person of ordinary skill in the art may still derive other drawings from these accompanying drawings without creative efforts.
FIG. 1a is a schematic diagram of a structure of a network system according to an embodiment of this application;
FIG. 1b is a schematic diagram of a partial structure of the network system presented in FIG. 1a according to an embodiment of this application;
FIG. 2 is a flowchart of a packet forwarding method according to an embodiment of this application;
FIG. 3 is a schematic diagram of a structure of a packet forwarding apparatus according to an embodiment of this application;
FIG. 4 is a schematic diagram of a structure of a network device according to an embodiment of this application; and
FIG. 5 is a schematic diagram of a structure of a network device according to an embodiment of this application.

### DESCRIPTION OF EMBODIMENTS

To make the objectives, technical solutions, and advantages of this application clearer, the following further describes the implementations of this application in detail with reference to the accompanying drawings.

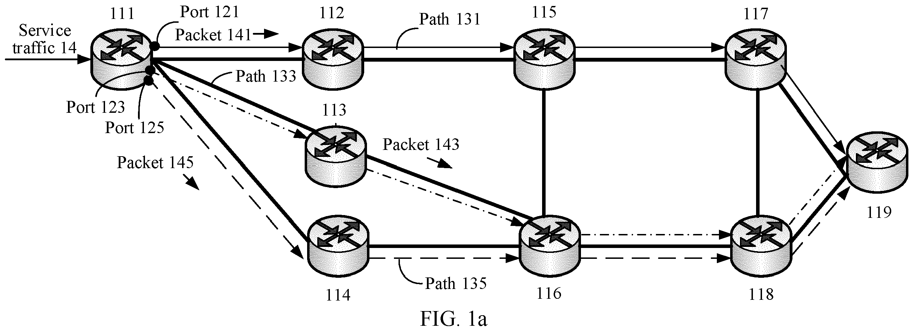

FIG. 1a shows a system 100 for forwarding service traffic in a network. The system 100 includes network devices 111 to 119 for forwarding service traffic. The network device 111 may be a network ingress device for forwarding the service traffic, the network device 119 may be a network egress device for forwarding the service traffic, the network device 118 is connected to a destination device of the service traffic, and the network devices 112 to 118 are intermediate forwarding devices. The network device 111 and the network device 119 each may be, for example, a provider edge (provider edge, PE) device, and the destination device may be, for example, a user host or another user-side network device. As devices having a forwarding function, the network devices 111 to 119 each may be a device such as a router, a switch, a forwarder, or a firewall. A network in which the system 100 is located may be an internet protocol version 4 (Internet Protocol version 4, IPv4)-based network, an internet protocol version 6 (Internet Protocol version 6, IPv6)-based network, a multiprotocol label switching (Multiprotocol Label Switching, MPLS)-based network, or another network scenario in which the solutions provided in embodiments of this application can be used. The service traffic may be forwarded to the network device 119 through a port of the network device 111. In the conventional technology, to maximize link resource utilization, load balancing for traffic forwarding may be deployed in the network device 111. For example, the network device 111 may separately forward service traffic 14 to the network devices 112, 113, and 114 through egress ports 121, 123, and 125. The egress ports 121, 123, and 125 are egress ports that can undertake load balancing-based forwarding on the network device 111, and are respectively corresponding to different paths 131, 133, and 135 for forwarding the service traffic 14. In this way, load balancing-based forwarding of the service traffic 14 along different paths is implemented. For example, a load balancing mechanism deployed in the network device 111 is ECMP. The network device 111 can evenly distribute the service traffic 14 sent to a same destination device onto three equal-cost paths 131, 133, and 135, and the three equal-cost paths respectively correspond to different egress ports 121, 123, and 125 on the network device 111. Common traffic distribution policies in ECMP include a "per packet (per packet)" policy and a "per flow (per flow)" policy. For load balancing in the "per packet" policy, data packets to a same destination device are evenly distributed onto different paths. For load balancing in the "per flow" policy, data packets to a same destination device may be classified into different flows based on 5-tuples carried in the packets, and then the different flows are evenly distributed onto different paths. The "per packet" policy is used as an example. FIG. 1a shows that three consecutive packets 141, 143, and 145 belonging to the service traffic 14 may be respectively hashed to ports 121, 123, and 125 based on source internet protocol (internet protocol, IP) addresses carried in the packets, so that the packets are forwarded to the network device 119 along different equal-cost forwarding paths 131, 133, and 135.

In some network application scenarios, to meet an SLA requirement of a network service to ensure network use experience of a user, network resources may be reserved for running some services. For example, a transmission bandwidth resource is reserved for a video service to ensure quality of the video service, or a network resource is reserved for service traffic related to an application such as the internet of vehicles to ensure running reliability and security of a key application through network resource isolation. For another example, a service network resource is reserved for some users for which key assurance needs to be provided, to improve user experience and loyalty. There are a plurality of technologies for implementing network resource reservation. A network slice (network slice) concept is proposed in a 5G mobile communications system. One network slice meets a connection and communication service requirement of one type of use cases or one use case. A large quantity of network slices that meet different connection capabilities form the entire 5G system. Currently, network slices defined in the 3rd generation partnership project (3rd Generation Partnership Project, 3GPP) protocol have three types: enhanced mobile broadband (enhanced mobile broadband, eMBB), ultra-reliable low-latency communications (ultra-reliable low latency communications, uRLLC), and massive machine type connection (massive machine type connection, mMTC). Each network slice type may be specific to a specific service type. For example, an eMBB slice type may be specific to a service with a high data rate and high mobility, a uRLLC slice may be used for processing in a high-reliability and low-latency communication scenario, and an mMTC slice may serve a large quantity of services (such as sensor and wearable device services) with a small data volume, a tolerable latency, and infrequent access. 5G network slicing may enable an operator to divide one hardware infrastructure into a plurality of virtual networks and allocate and flexibly combine resources based on a requirement, to meet different requirements of various services.

The system 100 shown in FIG. 1a is still used as an example. The system 100 may be configured to forward service traffic 14. The service traffic 14 may be, for example, various types of service data from a same user, service data of a same type from different users, or service traffic including data determined according to other service logic. The service traffic 14 may be sent to a same destination device. Based on different service requirements, and a network type or a network architecture for carrying a service, the destination device may be a user host, a user-side network device connected to a user host, a network-side network device, or the like. An address of the destination device may be carried in a packet header, or may be carried in a packet payload. To ensure quality of service of the service traffic 14, a network resource may be reserved for forwarding of the service traffic 14 in the system 100. In an implementation of network resource reservation, a network slice may be used. There may be a plurality of types of network resources reserved by using a network slice, for example, a bandwidth resource, a processing resource of a network device, an outbound interface resource, and a queue resource. A type of a resource included in one network slice may be one or more of the foregoing described types. For example, a type of a reserved resource is a bandwidth resource. Corresponding link bandwidth is reserved hop by hop for the service traffic 14 on the forwarding paths 131 and 133 in the system 100 to perform forwarding. In this case, it may be considered that a resource sum including hop-by-hop link bandwidth resources reserved on the forwarding paths 131 and 133 forms a network slice 150.

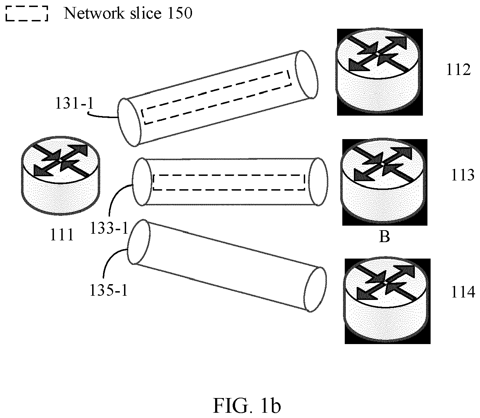

For ease of understanding, an example in which the service traffic 14 is sent by the network device 111 to a next forwarding device is used herein for description, as shown in FIG. 1b. Three links 131-1, 133-1, and 135-1 that can be used to perform load balancing-based forwarding on the service traffic 14 exist on the network device 111. The links 131-1, 133-1, and 135-1 respectively belong to the forwarding paths 131, 133, and 135, and are respectively connected to next-hop network devices through the ports 121, 123, and 125 of the network device 111. A bandwidth resource that is reserved for the service traffic 14 and that is corresponding to the network slice 150 is deployed on only the links 131-1 and 133-1, and may be used through the ports 121 and 123. Therefore, from a perspective of the network device 111, this may be described as that the bandwidth resource corresponding to the network slice 150 is configured for the ports 121 and 123. For example, according to a conventional ECMP load balancing principle, packets of the service traffic 14 are evenly allocated, based on a destination address of the packets by using a hash algorithm, a polling mode, or the like, to the ports 121, 123, and 125 that can undertake load balancing for forwarding. However, when a traffic packet is forwarded to the link 135-1 through the port 125, no network slice 150 is actually deployed on the link 135-1. This may also be understood as that no bandwidth resource is reserved for the service traffic 14 on the port 125. Therefore, some packets belonging to the service traffic 14 actually cannot be forwarded by using a reserved network slice resource, and consequently SLA assurance of the service traffic 14 is affected. It may be understood that, although not shown in FIG. 1a and FIG. 1b, a port that is other than the ports 121, 123, and 125 and that does not need to undertake load balancing-based forwarding may further exist on the network device 111.

To resolve the problem described in the foregoing scenario, embodiments of this application provide a packet forwarding method. A network device serving as a forwarding device obtains identification information of a network resource corresponding to traffic to which a packet belongs, and determines, based on the identification information, a target port set including one or more ports. The target port set is associated with the network resource. In this way, the network device can forward the traffic to a destination device by using an allocated network resource. According to the method provided in this application, each network device on a traffic forwarding path can determine, based on identification information of a network resource corresponding to a traffic packet, a corresponding port that can use a configured network resource, to forward the traffic packet. This ensures that traffic can be transmitted on the forwarding path by using the allocated network resource, to implement SLA assurance of the traffic.

For ease of understanding of the packet forwarding method provided in embodiments of this application, the following describes the method with reference to the accompanying drawings.

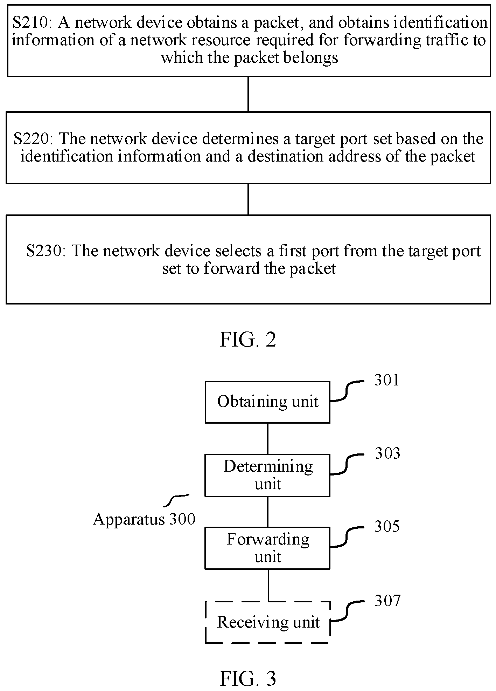

FIG. 2 is a schematic flowchart of a packet forwarding method according to an embodiment of this application. The method 200 may be applied to any possible network device on a traffic forwarding path, for example, the network device 111 serving as a network ingress device, any of the network devices 112 to 118 serving as intermediate forwarding devices, or the network device 119 serving as a network egress device that is shown in FIG. 1a. In some scenarios, the network ingress device may also be referred to as a head node, an ingress node, or a tunnel ingress device within a range of a management domain, the intermediate forwarding device may also be referred to as an intermediate node, and the network egress device may also be referred to as a tail node, an egress node, or a tunnel egress device. The management domain may be, for example, an autonomous domain, a network domain, or another network management domain with a defined range. During specific implementation, the method 200 may include, for example, the following S210 to S230.

S210: The network device obtains a packet, and obtains identification information of a network resource required for forwarding traffic to which the packet belongs.

The scenario shown in FIG. 1a is used as an example. The network device 111 serves as an ingress network device, and receives and forwards the service traffic 14. Before forwarding, the network device 111 determines identification information of a network resource that can be used for the service traffic 14. Still refer to FIG. 1b. The network resource that can be used for the service traffic 14 is, for example, the network slice 150, and identification information of the network slice 150 is, for example, a slice identifier (slice ID) "1", which is briefly referred to as slice 1 below. There may be a plurality of manners in which the network device 111 determines slice 1 corresponding to the service traffic 14. For ease of description, a packet 141 belonging to the service traffic 14 is used as an example herein. In a possible manner, the network device 111 directly determines the slice identifier based on a slice identifier carried in the received packet 141. In another possible manner, the packet 141 does not carry a slice identifier. As an ingress network device of the service traffic 14 in a network, the network device 111 may determine, based on a feature of the service traffic 14 to which the packet 141 belongs or a feature of the packet 141, such as a traffic type or a source device address, the slice identifier corresponding to the service traffic 14, and may add the slice identifier to the packet 141 of the service traffic 14 for forwarding. In still another possible manner, the network device 111 obtains, from a controller, the slice identifier corresponding to the service traffic 14, and adds the slice identifier to the packet 141 of the service traffic 14.

The foregoing uses an example in which the network resource is implemented in a form of a network slice. In another possible scenario, the network resource may be divided and determined in another implementation form. The identification information of the network resource may be one identifier that identifies the network resource, for example, slice 1, or may be a group of identifiers that identify the network resource, or may be one or more identifier bits that can identify the network resource. FIG. 1b is still used as an example. Network slices 150 exist on the links 131-1 and 133-1 connected to the network device 111. In a possible implementation, slice 1 may be used to identify the network slices 150 on the links 131-1 and 133-1. In another possible implementation, a group of slice identifiers "1-1" and "1-2" that have an association relationship may be used to separately identify the network slices 150 on the link 131-1 and the link 133-1. In another possible implementation, one or more identifier bits in a field carried in a packet of service traffic may be used to indicate a network resource. For example, several preset bits in a source device address or a destination device address carried in the packet are used as identifier bits of the network resource. Although the foregoing uses an example in which the links 131-1 and 133-1 each include the network slice 150, in some implementations, the network slices included in the links 131-1 and 133-1 may alternatively be defined as two sub-network slices that have an association relationship, for example, 150-1 and 150-2. Any definition and division manners may be used for the network resource, provided that the corresponding network resource available to the service traffic 14 can be determined based on the identification information.

S220: The network device determines a target port set based on the identification information and a destination address of the packet.

After determining the identifier slice 1 of the network slice 150 that can be used for the service traffic 14, the network device 111 may determine the ports 121 and 123 based on a correspondence that is between slice 1 and the ports 121 and 123 of the network device 111 and that is stored in the network device 111. The ports 121 and 123 have resources of the network slice 150, or the links 131-1 and 133-1 connected to the ports 121 and 123 have resources of the network slice 150. The resources of the network slice 150 that are associated with the ports 121 and 123 may be, for example, sub-interface resources included in the ports, or queue resources or link bandwidth resources associated with the ports. The port 121 or 123 may be a physical port, or may be a logical port. In some cases, the port 121 or 123 may include one or more sub-interfaces. For example, if the port 121 is of a physical port type, the port 121 may also be referred to as a physical interface, and types of a plurality of sub-interfaces that may be included in the port 121 may be physical sub-interfaces or logical sub-interfaces. The logical sub-interface may be, for example, a channelized sub-interface or a flexible Ethernet (flexible Ethernet, FlexE) sub-interface. If the port 121 is of a logical port type, types of a plurality of sub-interfaces that may be included in the port 121 may be a plurality of physical interfaces. The logical port may be, for example, a bond port, and a plurality of sub-interfaces included in the bond port may also be referred to as member interfaces. In this case, the port 121 may include one or more sub-interfaces identified by slice 1, or may include one or more sub-interfaces identified by a slice identifier "2" (which is briefly referred to as slice 2 below), and the link 131-1 connected to the port 121 may include a slice resource (for example, a bandwidth resource) identified by slice 1, or may include a slice resource (not shown in the figure) identified by slice 2. In a possible implementation, slice resources identified by slice 1 and slice 2 may respectively correspond to different sub-interfaces identified by slice 1 and slice 2 on the port 121. In another possible implementation, the port 121 or 123 may be of a sub-interface type. In an actual application scenario, a correspondence between a network slice and a type of interface such as a physical interface, a physical sub-interface, or a logical sub-interface may be flexible. For example, one network slice may correspond to a plurality of physical sub-interfaces, and one logical sub-interface may be shared by a plurality of network slices. Regardless of which manner is used, the network device 111 can determine a sub-interface corresponding to a network slice identifier in the port 121 or 123 based on identification information of a network slice, and complete forwarding through the sub-interface.

In a conventional implementation, after receiving the packet 141 of the service traffic 14, the network device 111 may determine one port on the device based on a destination address in the packet 141 to perform forwarding. If a load balancing manner is deployed on the network device 111, the network device 111 searches a forwarding entry based on the destination address, and then determines, according to a hash algorithm or in another manner based on port information that is included in the forwarding entry and that is of one or more ports having a load balancing capability that are corresponding to the destination address, one port from the one or more ports that undertake load balancing-based forwarding, to forward the packet 141. In the foregoing manner, some packets in the service traffic 14 may be hashed to the port 125. However, no network slice 150 is actually deployed on the port 125 or the link 135-1 connected to the port 125. As a result, SLA of the service traffic 14 cannot be effectively ensured.

Therefore, different from the manner in which a routing entry is searched based on the destination address and one forwarding port is determined, according to a hash algorithm or in another manner, from a plurality of ports included in the routing entry, the solution in this embodiment of this application proposes identifying the target port set associated with the network resource from a plurality of ports of the network device with reference to the destination address based on the identification information of the network resource that can be used to forward the traffic. The target port set includes one or more ports, and the network resource exists on the one or more ports included in the target port set. In this case, after the target port set is determined, one port is selected within a range of the target port set according to a load balancing algorithm or another preset rule to forward a traffic packet, so as to ensure that all packets of the traffic can be forwarded by using a reserved network resource. When the target port set includes a plurality of ports, one port may be selected from the determined target port set according to a preset rule to forward one packet, and a plurality of packets belonging to same traffic may be forwarded through different ports in the target port set. When the target port set includes only one port, it may be considered that the action of determining the target port set and the action of selecting the port from the target port set occur at the same time. In other words, when the target port set is determined, the only one port included in the target port set is selected.

FIG. 1a and FIG. 1b are still used as an example. Packets 141, 143, and 145 are all packets of the service traffic 14. If a conventional load balancing manner is used, as shown in FIG. 1a, the packets 141, 143, and 145 are respectively forwarded, through the ports 121, 123, and 125 on the network device 111 along the load balancing paths 131, 133, and 135, to the network device 119 serving as an egress network device. However, as shown in FIG. 1b, no network slice 150 is actually deployed on the link 135-1 that belongs to the load balancing path 135 and that is from the port 125. Consequently, a reserved resource of the network slice 150 cannot be used when the packet 145 is forwarded. In the solution provided in this embodiment of this application, when receiving the packets 141, 143, and 145, the network device 111 may obtain the slice identifier slice 1 corresponding to forwarding of the three packets. For example, slice 1 may be carried in the three packets, or may be determined through local matching based on a feature of traffic to which the three packets belong. Then, the network device 111 may obtain, based on slice 1, a target port set that includes one or more ports and that is corresponding to the identifier.

In a possible example, the network device 111 may store a correspondence between a destination address, a network slice identifier, and a target port set, as shown in Table 1. For the traffic 14 that is sent to a destination address 1.1.1.1 and for which the network slice 150 needs to be used, it may be determined, by querying Table 1, that the target port set corresponding to slice 1 (the identifier of the network slice 150) is a set including the ports 121 and 123. Table 1 shows only one possible form. In this implementation, a destination address and a network slice identifier may be directly used as indices to determine a target port set corresponding to the destination address and the network slice identifier in Table 1. Alternatively, another implementation may be used. For example, a plurality of different tables that are in a one-to-one correspondence with a plurality of different network slice identifiers are separately stored. Each table stores a correspondence between a plurality of different destination addresses and a plurality of different target port sets. In this case, the network device 111 may first find, by using slice 1, a table corresponding to slice 1, and then determine, in the table by using a destination address 1.1.1.1 as an index, that a target port set corresponding to the destination address 1.1.1.1 is a set including the ports 121 and 123. It can be learned that in this example, the network device 111 may determine the corresponding target port set by using the destination address and the network slice identifier based on the established correspondence between a destination address, a network slice identifier, and a target port set. The correspondence between a destination address, a network slice identifier, and a target port set may be established in a plurality of feasible implementations. In the example in Table 1, the ports 121 and 123 included in the target port set belong to the ports 121, 123, and 125 that may be used by the network device 111 in the conventional load balancing manner. In another possible case, the target port set may include a port other than the port 121, 123, or 125.

In another possible example, the network device 111 may identify, in a locally maintained table (for example, a routing and forwarding table), a port that can be used to forward traffic when a network slice identifier is hit. As shown in Table 2, the network device 111 may hit a forwarding entry in Table 2 (the first row in Table 2) based on a destination address carried in a packet, and determine, in the forwarding entry based on slice 1 corresponding to the packet, the ports 121 and 123 having a corresponding "selected" identifier as ports that can be used to forward the packet. It may be considered that the selected ports 121 and 123 form a target port set. A port indicated by the "selected" identifier in the forwarding entry is a port corresponding to a network slice. For example, according to the example shown in Table 2, the network device 111 finds a routing and forwarding entry (the first row in Table 2) based on the destination address 1.1.1.1 and the slice identifier slice 1 of the service traffic 14, and determines, based on a port "selected" identifier, that the ports 121 and 123 in the load balancing ports 121, 123, and 125 to the destination address 1.1.1.1 can be used to forward the service traffic 14 by using the slice 150 identified by slice 1. In a specific forwarding process, the network device 111 may use the ports 121 and 123 to implement load balancing, or may specify one of the ports 121 and 123 for traffic forwarding with reference to another factor. When load balancing is performed on the ports 121 and 123, load balancing proportions of the ports 121 and 123 during traffic forwarding may be determined according to a rule such as ECMP or UCMP or according to another rule, for example, based on proportions of network resources that are respectively carried in the links 131-1 and 133-1 associated with the ports 121 and 123 and that are used to forward the service traffic 14. Compared with the conventional load balancing manner, in the solution in this embodiment of this application, all the packets 141, 143, and 145 can be forwarded along the link 131-1 or 133-1 on which the network slice 150 is deployed, instead of being forwarded through the link 135-1.

**Table 1**

| Destination address | Network slice identifier (slice ID) | Target port set |
|---|---|---|
| 1.1.1.1 (address of the network device 119) | 1 | 121, 123 |
| 1.1.1.1 | 2 | 123, 125 |

**Table 2**

| Destination address | Network slice identifier (slice ID) | Port | "Selected" identifier |
|---|---|---|---|
| 1.1.1.1 (address of the network device 119) | 1 | 121 | 1 |
| | | 123 | 1 |
| | | 125 | |
| 2.2.2.2 | 2 | 121 | |
| | | 123 | 1 |
| | | 125 | 1 |
| 3.3.3.3 | 3 | 121 | |
| | | 123 | |
| | | 125 | |

During specific implementation, a control plane of the network device 111 may implement receiving and sending of the service traffic 14 and generation of a routing table according to the interior gateway protocol (Internal Gateway Protocol, IGP) or the border gateway protocol (Border Gateway Protocol, BGP), and deliver a forwarding table including identification information of a network resource to a forwarding plane according to a requirement, to support the forwarding plane in forwarding traffic based on the identification information. During specific implementation, for example, the port 121, 123, or 125 shown in Table 1 or Table 2 may be a physical port or a logical port including a plurality of sub-interfaces, or may be a sub-interface that does not include an interface at another subdivision granularity.

In the foregoing example in S220, Table 1 includes all the ports 121 and 123 corresponding to slice 1, and all the ports 121 and 123 corresponding to slice 1 are marked as selected in Table 2. In another possible implementation scenario, information about some of ports corresponding to a network slice identifier may be stored or enabled in Table 1 or Table 2. For example, it is assumed that five ports on the network device 111 can be associated with the network slice 150. In other words, a resource of the network slice 150 can be used or directed to through each of the five ports. However, due to a dynamic requirement or a local policy, it may be allowed that a correspondence between only some of the five ports and slice 1 is stored in Table 1, or only some of the five ports are enabled in Table 2. An operation of enabling some ports may be implemented in the following manner: In Table 2, only some of the five ports are stored and a "selected" identifier is configured for the some ports; or all the five ports are stored in Table 2, but a "selected" identifier is configured for only some of the ports. In the foregoing case, only the ports configured with the "selected" identifier form a target port set.

The foregoing implementation is merely used as a possible example, and another feasible manner may alternatively be used to indicate the network device to obtain one or more local available ports corresponding to the network resource as a target port set, so as to indicate the network device to forward, through the one or more local available ports, the traffic for which the network resource needs to be used.

S230: The network device selects a first port from the target port set to forward the packet.

After determining, according to S210 and S220, the ports 121 and 123 that can forward the service traffic 14, the network device 111 may forward a packet of the service traffic 14 to a next network device on a path through the ports 121 and 123, for example, the packets 141, 143, and 145. For example, the packet 141 is forwarded through the port 121. In a possible implementation, when the network device 111 receives a packet, if the packet carries identification information for identifying a network resource, for example, slice 1, the network device 111 may directly forward the packet to a next network device through the port 121 or 123. In another possible implementation, when a packet received by the network device 111 does not include identification information of a network resource, the network device 111 may first determine identification information of a network resource required for forwarding the packet, add the identification information to the packet to update the packet, and then send the updated packet to a next network device. In still another possible implementation, when a packet received by the network device 111 includes identification information M of a network resource, and the identification information M is used to identify the network resource in a current network domain, but identification information used to identify the network resource in a next network domain is changed to identification information N, the network device 111 may replace the identification information M in the received packet with the identification information N, and send a packet carrying the identification information N to a next network device. The network device 111 may determine the identification information N by using a locally stored correspondence between the identification information M and the identification information N. Alternatively, the network device 111 may send the identification information M to a controller, so that the controller can send the corresponding identification information N to the network device 111 based on the identification information M. In still another possible implementation, packets received by hop-by-hop forwarding devices on a forwarding path each may not include identification information of the network resource, but a controller notifies each forwarding device of the identification information.

In a possible case, the first port includes a plurality of sub-interfaces. For example, the first port selected by the network device 111 from the target port set is the port 121. The port 121 includes 10 sub-interfaces, and three sub-interfaces are associated with the network slice 150 allocated to the service traffic 14. In a specific implementation, the three sub-interfaces may also be identified by slice 1. To be specific, in this implementation, slice 1 may be used to determine a target port set { 121, 123} for forwarding the service traffic 14 on the network device 111, and may be used to determine one or more sub-interfaces for forwarding the service traffic 14 on the port 121 or 123. Because the port 121 includes three sub-interfaces associated with slice 1, for a packet that is sent to the port 121 and that belongs to the service traffic 14, one of the three sub-interfaces may be determined according to a preset rule to complete forwarding. The preset rule may be, for example, a sub-interface-level load balancing rule. To be specific, for a plurality of packets that are sent to the port 121 and that belong to the service traffic 14, load balancing-based forwarding may be performed by using the three sub-interfaces according to the load balancing rule.

S210 to S230 describe a scenario in which the network device 111 can obtain the identification information of the network resource used to carry the traffic and determine, based on the identification information, the target port set for forwarding the traffic. However, in an actual application scenario, for a network device, some traffic may have no available reserved network resource. In this case, optionally, when obtaining the traffic, the network device 111 directly forwards the traffic in a conventional manner. For example, the system shown in FIG. 1a and FIG. 1b is still used as an example. After the network device 111 receives traffic A, if the network device 111 does not find a network resource reserved for the traffic A in the network device 111, or a network resource reserved for the traffic A on a link connected to the network device 111, the network device 111 may directly forward the traffic A through the load balancing ports 121, 123, and 125 according to a local load balancing algorithm. The ports 121, 123, and 125 that may be used to forward the traffic A may also be referred to as a port group.

Optionally, in the foregoing description, an example in which a network device on a forwarding path reserves a network resource for service traffic in a manner such as static configuration is used. However, in some scenarios, a network device may dynamically allocate a network resource to service traffic. For example, dynamic network resource reservation is triggered by using a data flow. Optionally, hop-by-hop network devices on a forwarding path each may allocate a network resource to service traffic, to implement end-to-end resource allocation. Alternatively, some network devices on a forwarding path may allocate a network resource to service traffic. The some network devices may be, for example, key forwarding nodes on the path or forwarding nodes supporting a network resource allocation function. Another network device on the path performs forwarding in a conventional manner.

According to the method provided in this embodiment of this application, a corresponding port associated with a network resource may be determined based on identification information of the network resource corresponding to a traffic packet, to forward the traffic packet. This ensures that traffic can be transmitted on a forwarding path by using the allocated network resource, to implement SLA assurance of the traffic and save a network running resource.

The packet forwarding method provided in embodiments of this application is described in detail above with reference to FIG. 1a, FIG. 1b, and FIG. 2. It may be understood that, to implement functions described in the foregoing methods, the network device configured to perform the method needs to include corresponding hardware and/or software modules for performing the functions. This application can be implemented in a form of hardware or a combination of hardware and computer software with reference to the execution processes of the methods described in the embodiments disclosed in this specification. Whether a function is performed by hardware or hardware driven by computer software depends on particular applications and design constraints of the technical solutions. A person skilled in the art may use different manners to implement the described functions for each particular application with reference to embodiments, but it should not be considered that the implementation goes beyond the scope of this application.

In the embodiments, a corresponding device may be divided into function modules based on the foregoing method embodiments. For example, function modules may be obtained through division based on corresponding functions, or two or more functions may be integrated into one processing module. The integrated module may be implemented in a form of hardware. It should be noted that in the embodiments, division into the modules is an example, and is specifically a possible logical function division manner. During actual implementation, another division manner may be used.

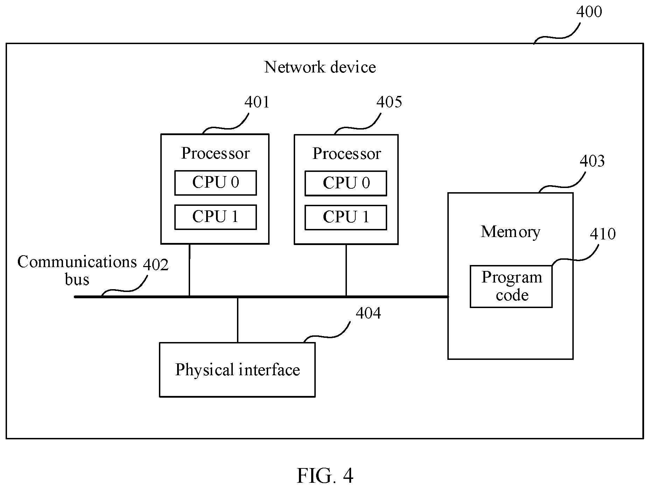

When the function module division manner is used, packet forwarding apparatuses provided in embodiments of this application are described below with reference to FIG. 3 and FIG. 4.

FIG. 3 is a block diagram of a packet forwarding apparatus 300 according to an embodiment of this application. For example, the apparatus 300 may be any of the network devices 111 to 119 in the system 10 in FIG. 1a and FIG. 1b, or a module or a component in any of the network devices 111 to 119. As shown in FIG. 3, the apparatus 300 may include an obtaining unit 301, a determining unit 303, and a forwarding unit 305.

The obtaining unit 301 is configured to obtain first identification information of a first network resource required for forwarding first traffic to which a first packet belongs. For a function that can be performed by the obtaining unit 301, refer to related descriptions in S210.

The determining unit 303 is configured to determine a target port set based on the first identification information and a first destination address of the first packet, where the target port set is associated with the first network resource. For a function that can be performed by the determining unit 303, refer to related descriptions in S220.

The forwarding unit 305 is configured to select a first port from the target port set to forward the first packet. For a function that can be performed by the forwarding unit 305, refer to related descriptions in S230. An example is as follows.

In a possible implementation, for one packet in the first traffic, the determining unit 303 is further configured to: determine the target port set based on a correspondence between the first identification information, the first destination address, and the target port set by using the first identification information and the first destination address; or determine a first port group based on a correspondence between the first destination address and the first port group, and determine, in the first port group based on the first identification information, the target port set that meets a condition.

In a possible implementation, the first traffic further includes a second packet, the determining unit 303 is further configured to select a second port from the target port set, and the forwarding unit 305 is further configured to forward the second packet by using the second port.

In a possible implementation, the first port and the second port are separately selected from the target port set according to a load balancing rule.

The load balancing rule may be, for example, ECMP, UCMP, or a rule based on a proportion of the first network resource associated with each port in the target port set.

In a possible implementation, the obtaining unit 301 is configured to obtain a third packet, where the third packet belongs to second traffic; the determining unit 303 is configured to: when identification information of a network resource required for forwarding the second traffic fails to be obtained, determine, based on a correspondence between a second destination address of the third packet and a second port group, the second port group for forwarding the third packet, where a port included in the second port group is a port of the first network device to the second destination address; and the forwarding unit 305 is configured to forward the second traffic by using the second port group.

In a possible implementation, the first port includes a plurality of sub-interfaces, and the selecting a first port from the target port set to forward the first packet includes: determining a sub-interface in the plurality of sub-interfaces, where the plurality of sub-interfaces are associated with the first network resource; and forwarding the first packet by using the determined sub-interface.

In a possible implementation, determining one or more sub-interfaces in the plurality of sub-interfaces includes: determining the sub-interfaces in the plurality of sub-interfaces based on the first identification information.

In a possible implementation, the apparatus 300 further includes a receiving unit 307, and the receiving unit 307 is configured to receive the first packet. Then, the obtaining unit 301 is configured to: obtain second identification information of the first network resource corresponding to the first packet, and obtain the first identification information based on the second identification information.

The first identification information includes an identifier or an identifier group for identifying the first network resource, or the first identification information includes a plurality of designated bits in a source address carried in the first packet or a plurality of designated bits in the destination address.

An embodiment of this application further provides a network device 400. For example, the network device may be the network device described in the method embodiments, for example, any of the network devices 111 to 119 in the system 10 shown in FIG. 1a and FIG. 1b, or may be the apparatus 300 shown in FIG. 3.

The network device 400 may correspond to the network device in the foregoing method embodiments. The network device 400 includes various hardware or software modules for implementing method steps performed by the network device in the method embodiments. For details about a detailed procedure in which the network device 400 forwards traffic by using a network resource, refer to the foregoing method embodiments. For brevity, details are not described herein again. The execution processes mentioned in the foregoing method embodiments may be completed by using a hardware integrated logical circuit in a processor of the network device 400 or by using instructions in a form of software, for example, may be directly performed and completed by a hardware processor, or may be performed and completed by using a combination of hardware and software modules in the processor. The software module may be located in a storage medium, such as a random access memory, a flash memory, a read-only memory, a programmable read-only memory, an electrically erasable programmable memory, or a register. The storage medium is located in the memory, and the processor may read information in the memory and completes the steps of the foregoing method in combination with hardware of the processor.

If the network device 400 corresponds to the apparatus 300 shown in FIG. 3, each function module in the apparatus 300 may be implemented by using software, hardware, or a combination of software and hardware of the network device 400. A function performed by a function module implemented in a form of software in the apparatus 300 may be performed by the network device 400 after the processor of the network device 400 reads program code stored in the memory.

FIG. 4 is a schematic diagram of a structure of an example network device 400 according to an embodiment of this application. The network device 400 includes at least one processor 401, a communications bus 402, a memory 403, and at least one physical interface 404.

The processor 401 may be a general-purpose central processing unit (central processing unit, CPU), a network processor (network processor, NP), a microprocessor, or one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field-programmable gate array, FPGA), generic array logic (generic array logic, GAL), or any combination thereof.

The communications bus 402 is configured to transfer information between the foregoing components. The communications bus 402 may be classified into an address bus, a data bus, a control bus, and the like. For ease of representation, only one thick line is used to represent the bus in the figure, but this does not mean that there is only one bus or only one type of bus.

The memory 403 may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only Memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer. However, this is not limited. The memory 403 may exist independently and is connected to the processor 401 by using the communications bus 402. Alternatively, the memory 403 may be integrated with the processor 401.

The physical interface 404 is configured to communicate with another device or a communication network by using any apparatus such as a transceiver. The physical interface 404 includes a wired communications interface, or may include a wireless communications interface. The wired communications interface may be, for example, an Ethernet interface. The Ethernet interface may be an optical interface, an electrical interface, or a combination thereof. The wireless communications interface may be, for example, a wireless local area network (wireless local area networks, WLAN) interface, a cellular network communications interface, or a combination thereof. The physical interface 404 is also referred to as a physical port. There may be one or more physical interfaces 404.

During specific implementation, in an embodiment, the processor 401 may include one or more CPUs, for example, a CPU 0 and a CPU 1 shown in FIG. 4.

During specific implementation, in an embodiment, the network device 400 may include a plurality of processors, for example, the processor 401 and a processor 405 shown in FIG. 4. Each of the processors may be a single-core processor (single-CPU) or may be a multi-core processor (multi-CPU). The processor herein may refer to one or more devices, circuits, and/or processing cores configured to process data (such as computer program instructions).

During specific implementation, in an embodiment, the network device 400 may further include an output device 406 and an input device 407. The output device 406 communicates with the processor 401, and may display information in a plurality of manners. For example, the output device 406 may be a liquid crystal display (liquid crystal display, LCD), a light-emitting diode (light emitting diode, LED) display device, a cathode ray tube (cathode ray tube, CRT) display device, or a projector (projector). The input device 407 communicates with the processor 401, and may receive an input from a user in a plurality of manners. For example, the input device 407 may be a mouse, a keyboard, a touchscreen device, a sensing device, or the like.

In some embodiments, the memory 403 is configured to store program code 410 for performing the solutions of this application, and the processor 401 may execute the program code 410 stored in the memory 403 to implement a corresponding function. For example, a program stored in the program code 410 may be invoked to implement functions of the obtaining unit 301 and the determining unit 302 in the apparatus 300. In other words, the network device 400 may cooperate by using the processor 401 and the program code 410 in the memory 403 to implement the method procedure provided in the foregoing method embodiments. In this case, the obtaining module 301 and the determining module 303 in the apparatus 300 may be equivalent to the processor 401 in the network device 400, and the forwarding unit 305 or the receiving unit 307 is equivalent to the physical interface 404 in the network device 400.

FIG. 4 shows a possible example of a composition structure of a network device. The network device may alternatively use another composition structure. For example, the network device includes at least a processor, and a memory configured to store program code may be independent of the network device. For example, the memory may be storage space on a cloud server or a network hard disk. In addition, there may be one or more memories. When there are a plurality of memories, the plurality of memories may be located at a same location or different locations, and may be used independently or in cooperation.

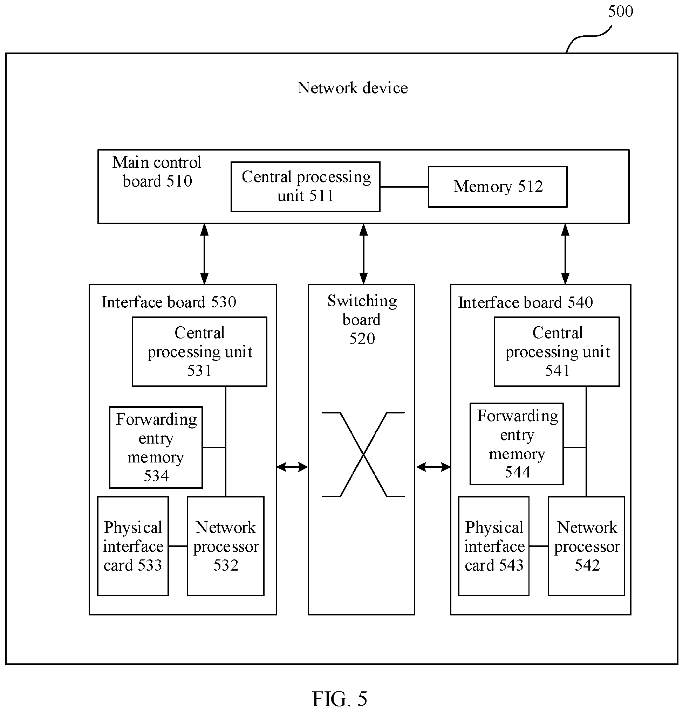

FIG. 5 is a schematic diagram of a structure of another network device according to an embodiment of this application. For example, the network device 500 may be the network device described in the method embodiments, for example, any of the network devices 111 to 119 in the system 10 shown in FIG. 1a and FIG. 1b, or may be the apparatus 300 shown in FIG. 3.

The network device 500 includes a main control board 510 and an interface board 530.

The main control board 510 is also referred to as a main processing unit (main processing unit, MPU) or a route processor card (route processor card). Control and management performed by the main control board 510 on components in the network device 500 include route computation, device management, device maintenance, and protocol processing functions. The main control board 510 includes a central processing unit 511 and a memory 512.

The interface board 530 is also referred to as a line processing unit (line processing unit, LPU), a line card (line card), or a service board. The interface board 530 is configured to provide various service interfaces and forward a data packet. The service interface includes but is not limited to an Ethernet interface, a POS (Packet over SONET/SDH) interface, or the like. The Ethernet interface is, for example, a flexible Ethernet service interface (Flexible Ethernet Clients, FlexE Clients). The interface board 530 includes a central processing unit 531, a network processor 532, a forwarding entry memory 534, and a physical interface card (physical interface card, PIC) 533.

The central processing unit 531 on the interface board 530 is configured to control and manage the interface board 530, and communicate with the central processing unit 511 on the main control board 510.

The network processor 532 is configured to implement packet forwarding processing. The network processor 532 may be in a form of a forwarding chip. Specifically, processing on an uplink packet includes processing at a packet ingress interface and forwarding table lookup, and processing on a downlink packet includes forwarding table lookup and the like.

The physical interface card 533 is configured to implement an interconnection function at a physical layer. Original traffic enters the interface board 530 from the physical interface card 533, and a processed packet is sent from the physical interface card 533. The physical interface card 533 includes at least one physical interface. The physical interface is also referred to as a physical port. The physical interface card 533 is also referred to as a sub-card, may be installed on the interface board 530, and is responsible for converting an optical/electrical signal into a packet, performing validity check on the packet, and forwarding the packet to the network processor 532 for processing. In some embodiments, the central processing unit 531 on the interface board 503 may also perform a function of the network processor 532, for example, implement software forwarding based on a general-purpose CPU. In this case, the network processor 532 is not required on the physical interface card 533.

Optionally, the network device 500 includes a plurality of interface boards. For example, the network device 500 further includes an interface board 540. The interface board 540 includes a central processing unit 541, a network processor 542, a forwarding entry memory 544, and a physical interface card 543.

Optionally, the network device 500 further includes a switching board 520. The switching board 520 may also be referred to as a switch fabric unit (switch fabric unit, SFU). When the network device has a plurality of interface boards 530, the switching board 520 is configured to complete data exchange between the interface boards. For example, the interface board 530 and the interface board 540 may communicate with each other through the switching board 520.

The main control board 510 is coupled to the interface board 530. For example, the main control board 510, the interface board 530, the interface board 540, and the switching board 520 are connected to a system backplane through a system bus to implement interworking. In a possible implementation, an inter-process communication (inter-process communication, IPC) channel is established between the main control board 510 and the interface board 530, and communication is performed between the main control board 510 and the interface board 530 through the IPC channel.

Logically, the network device 500 includes a control plane and a forwarding plane. The control plane includes the main control board 510 and the central processing unit 531. The forwarding plane includes components used for forwarding, for example, the forwarding entry memory 534, the physical interface card 533, and the network processor 532. The control plane performs functions such as a function of a router, generating a forwarding table, processing signaling and protocol packets, and configuring and maintaining a status of a device. The control plane delivers the generated forwarding table to the forwarding plane. On the forwarding plane, the network processor 532 searches the forwarding table delivered by the control plane to forward a packet received by the physical interface card 533. The forwarding table delivered by the control plane may be stored in the forwarding entry memory 534. In some embodiments, the control plane and the forwarding plane may be completely separated, and are not on a same device.

In the network device 500 configured to perform the foregoing method embodiments, the central processing unit 511 may be configured to perform operations in S210 and S220. The network processor 532 may trigger the physical interface card 533 to forward a traffic packet to another network device.

It should be understood that the forwarding unit 305 and the receiving unit 307 in the apparatus 300 may be equivalent to the physical interface card 533 or the physical interface card 543 in the network device 500. The obtaining unit 301 and the determining unit 303 in the apparatus 300 may be equivalent to the central processing unit 511 or the central processing unit 531 in the network device 500.

It should be understood that, in this embodiment of this application, operations on the interface board 540 are consistent with operations on the interface board 530. For brevity, details are not described again. The main control board 510, the interface board 530, and/or the interface board 540 in the network device 500 may implement functions and/or various steps implemented by the network device in the foregoing method embodiments. For brevity, details are not described herein again.

It should be understood that, there may be one or more main control boards. When there are a plurality of main control boards, the main control boards may include an active main control board and a standby main control board. There may be one or more interface boards. A network device having a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need the switching board, and the interface board provides a function of processing service data in an entire system. In a distributed forwarding architecture, the network device may have at least one switching board, and data exchange between a plurality of interface boards is implemented by using the switching board, to provide a large-capacity data exchange and processing capability. Therefore, a data access and processing capability of a network device in the distributed architecture is better than that of a device in the centralized architecture. Optionally, the network device may alternatively be in a form in which there is only one card. To be specific, there is no switching board, and functions of the interface board and the main control board are integrated on the card. In this case, a central processing unit on the interface board and a central processing unit on the main control board may be combined into one central processing unit on the card, to perform functions obtained after the two central processing units are combined. The device of this form (for example, a network device such as a low-end switch or a router) has a weak data exchange and processing capability. A specific architecture that is to be used depends on a specific networking deployment scenario. This is not limited herein.

In some possible embodiments, the network device may be implemented as a virtualized device. For example, the virtualized device may be a virtual machine (virtual machine, VM) on which a program having a packet sending function is run, and the virtual machine is deployed on a hardware device (for example, a physical server). The virtual machine is a complete software-simulated computer system that has complete hardware system functions and that runs in an entirely isolated environment. The virtual machine may be configured as the network device. For example, the network device may be implemented based on a general-purpose physical server in combination with a network function virtualization (network functions virtualization, NFV) technology. The network device is a virtual host, a virtual router, or a virtual switch. By reading this application, a person skilled in the art may obtain, on the general-purpose physical server through virtualization with reference to the NFV technology, the network device having the foregoing functions. Details are not described herein.

It should be understood that the network devices in the foregoing product forms separately have any function of the network device in the foregoing method embodiments. Details are not described herein.

An embodiment of this application provides a computer program product. When the computer program product runs on a network device, the network device is enabled to perform the method provided in the foregoing method embodiments.

An embodiment of this application further provides a chip system, including a processor and an interface circuit. The interface circuit is configured to receive instructions and transmit the instructions to the processor. The processor may be configured to execute the instructions, to enable a network device to perform the method provided in embodiments of this application. The processor is coupled to a memory, the memory is configured to store a program or instructions, and when the program or the instructions is/are executed by the processor, the chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application specific integrated circuit, ASIC), a system on chip (system on chip, SoC), a CPU, an NP, a digital signal processor (digital signal processor, DSP), a micro controller unit (micro controller unit, MCU), a programmable logic device (programmable logic device, PLD), or another integrated chip.

All of the foregoing optional technical solutions may form optional embodiments of this disclosure through any combination. Details are not described herein again.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but are not intended to limit this application. Any modification, equivalent replacement, or improvement made without departing from the spirit and principle of this application should fall within the protection scope of this application.

## Claims

1. A packet forwarding method, wherein the method is performed by a first network device, and the method comprises:
obtaining first identification information of a first network resource required for forwarding first traffic to which a first packet belongs;
determining a target port set based on the first identification information and a first destination address of the first packet, wherein the target port set is associated with the first network resource; and
selecting a first port from the target port set to forward the first packet.

2. The method according to claim 1, wherein the determining a target port set based on the first identification information and a destination address of the first packet comprises:
determining the target port set based on a correspondence between the first identification information, the first destination address, and the target port set by using the first identification information and the first destination address; or
determining a first port group based on a correspondence between the first destination address and the first port group, and determining, in the port group based on the first identification information, the target port set that meets a condition.

3. The method according to claim 1 or 2, wherein the first traffic further comprises a second packet, and the method further comprises:
selecting a second port from the target port set to forward the second packet.

4. The method according to claim 3, wherein the first port and the second port are separately selected from the target port set according to a load balancing rule.

5. The method according to claim 4, wherein the load balancing rule comprises any one of equal-cost multi-path routing ECMP, unequal-cost multiple path UCMP, or a rule based on a proportion of the first network resource associated with each port in the target port set.

6. The method according to any one of claims 1 to 5, wherein the first port comprises a plurality of sub-interfaces, and the selecting a first port from the target port set to forward the first packet comprises:
determining a sub-interface in the plurality of sub-interfaces, wherein the determined sub-interface is associated with the first network resource; and
forwarding the first packet by using the determined sub-interface.

7. The method according to claim 6, wherein the determining a sub-interface in the plurality of sub-interfaces comprises:
determining the sub-interface in the plurality of sub-interfaces based on the first identification information.

8. The method according to any one of claims 1 to 7, wherein the method further comprises:
obtaining a third packet, wherein the third packet belongs to second traffic; and
forwarding the third packet by using a second port group based on a correspondence between a second destination address of the third packet and the second port group when identification information of a network resource required for forwarding the second traffic to which the third packet belongs fails to be obtained, wherein a port comprised in the second port group is a port of the first network device to the second destination address.

9. The method according to any one of claims 1 to 8, wherein the method further comprises:
before the first identification information is obtained, receiving the first packet, and obtaining second identification information of the first network resource associated with the first packet; and
the obtaining first identification information of a first network resource required for forwarding a first packet comprises:
obtaining the first identification information based on the second identification information.

10. The method according to any one of claims 1 to 9, wherein the first identification information comprises an identifier or an identifier group for identifying the first network resource, or the first identification information comprises a plurality of designated bits in a source address in the first packet or a plurality of designated bits in the destination address.

11. The method according to claim 4, wherein the first network resource comprises any two or more of the following: a bandwidth resource, a queue resource, or a sub-interface resource associated with the one or more ports.

12. The method according to claim 11, wherein the target port set comprises at least two ports.

13. The method according to any one of claims 1 to 12, wherein the first network resource is a network slice, and the first identification information is a slice identifier of the network slice.

14. The method according to any one of claims 1 to 13, wherein the first network device is any one of an ingress network device, an intermediate network device, or an egress network device on a network side on a path to the destination address.

15. A packet forwarding system, wherein the system comprises a first network device and a second network device;
the first network device is configured to: obtain first identification information of a first network resource required for forwarding first traffic to which a first packet belongs; determine a first target port set based on the first identification information and a first destination address of the first packet, wherein the first target port set is associated with the first network resource; and select a first port from the first target port set to forward the first packet; and
the second network device is configured to receive the first packet.

16. The system according to claim 15, wherein that the first network device is configured to determine a first target port set based on the first identification information and a destination address carried in the first packet comprises:
the first network device determines the first target port set based on a correspondence between the first identification information, the first destination address, and the first target port set by using the first identification information and the first destination address; or
the first network device determines a first port group based on a correspondence between the first destination address and the first port group, and determines, in the port group based on the first identification information, the first target port set that meets a condition.

17. The system according to claim 15 or 16, wherein the first traffic further comprises a second packet, and the system further comprises:
selecting a second port from the first target port set to forward the second packet.

18. The system according to claim 17, wherein the first port and the second port are separately selected from the first target port set according to a load balancing rule.

19. The system according to any one of claims 15 to 18, wherein the first port comprises a plurality of sub-interfaces, and that the first network device selects a first port from the first target port set to forward the first packet comprises:
determining a sub-interface in the plurality of sub-interfaces, wherein the determined sub-interface is associated with the first network resource; and forwarding the first packet by using the determined sub-interface.

20. The system according to any one of claims 15 to 19, wherein
the first network device is further configured to: obtain a third packet, wherein the third packet belongs to second traffic; and forward the third packet by using a second port group based on a correspondence between a second destination address of the third packet and the second port group when identification information of a network resource required for the second traffic to which the third packet belongs fails to be obtained, wherein a port comprised in the second port group is a port of the first network device to the second destination address.

21. The system according to any one of claims 15 to 20, wherein the second network device is further configured to:
determine a second target port set of the second network device based on the first identification information and the first destination address that are corresponding to the received first packet; and
select a third port from the second target port set to forward the first packet.

22. The system according to claims 15 to 21, wherein the second network device is further configured to:
obtain corresponding second identification information based on the first identification information, and add, by the second network device, the second identification information to the first packet, to indicate a network device that receives the first packet to determine, based on the second identification information, a fourth port for forwarding the first packet.

23. The system according to claims 15 to 22, wherein the first network resource comprises any two or more of the following: a bandwidth resource, a queue resource, or a sub-interface resource associated with the one or more ports.

24. The system according to claims 15 to 23, wherein the first target port set comprises at least two ports.

25. The system according to any one of claims 15 to 24, wherein the first network device is one of an ingress network device or an intermediate network device on a network side on a path to the destination address, and the second network device is one of an intermediate network device or an egress network device on the network side on the path to the destination address.

26. A network device, wherein the network device comprises a processor and a memory, the memory stores program code, and the program code is loaded and executed by the processor, so that the network device implements the method for forwarding a packet by using a network resource according to any one of claims 1 to 14.

27. A computer-readable storage medium, wherein the computer-readable storage medium stores program code, and when the program code is run on a computer, the computer is enabled to perform the method for forwarding a packet by using a network resource according to any one of claims 1 to 14.

28. A computer program, wherein when the program is run on a computer, the computer is enabled to perform the method for forwarding a packet by using a network resource according to any one of claims 1 to 14.
